# EUROPÄISCHE PATENTSCHRIFT

(11) **EP 1 270 342 B1**
(45) Veröffentlichungstag und Bekanntmachung des Hinweises auf die Patenterteilung: **05.04.2006**
(21) Anmeldenummer: 02013559.6
(22) Anmeldetag: 19.06.2002
(51) Int. Cl.: B60R 21/20

(54) **Gassackmodul**
Airbag module
Module de coussin gonflable

(30) Priorität: 20.06.2001 DE 20110175 U
(43) Veröffentlichungstag der Anmeldung: 02.01.2003
(73) Patentinhaber: TRW Automotive Safety Systems GmbH, 63743 Aschaffenburg (DE)
(72) Erfinder: Bieber, Udo, 63843 Niedernberg (DE); Lorenz, Christian, 63849 Leidersbach 3 (DE)
(74) Vertreter: Kitzhofer, Thomas

(56) Entgegenhaltungen:
- DE-A- 19 749 914
- DE-A- 19 816 080

## Beschreibung

Die Erfindung betrifft ein Gassackmodul, mit einem Gassack und einem Modulgehäuse, das eine Vorderwand aufweist, welche eine Austrittsöffnung, die die Form eines Ringes hat, für den Gassack verschließt, wobei ein zentrischer Abschnitt der Vorderwand am Modul radial einwärts der Austrittsöffnung so befestigt ist, daß der zentrische Abschnitt im Bereich seiner Befestigung an einer freien Bewegung nach außen beim Öffnen der Vorderwand gehindert wird.

Ein solches Gassackmodul ist aus der DE 197 49 914 A1 bekannt. Der Gassack verläßt bei diesem Stand der Technik über die ringförmige Austrittsöffnung ebenfalls in Ringform das Modul und weist im voll entfalteten Zustand eine von der Vorderwand ausgehende, sich bis in das Modul erstreckende Einbuchtung auf. Damit die Vorderwand ringförmig aufreißen kann, hat sie eine ringförmige, umlaufende Aufreißlinie, von der aus sich radiale Aufreißlinien radial einwärts und radial auswärts erstrecken, die kleine Segmente der Vorderwand bilden. Beim Aufreißen der Vorderwand schwenken diese kleinen Segmente, vom Modul aus gesehen, nach außen. Die kleinen Segmente werden durch eine Art Filmscharnier am Rest der Vorderwand gehalten, wobei die Herstellung des Filinschämiers sehr aufwendig ist, was im übrigen auch für die Aufreißlinien gilt Darüber hinaus muß stets eine-sogenannte Initialstelle für die radiale AufreiBlinie, wie im übrigen auch für die umlaufende Aufreißlinie vorgesehen sein, um die Kraft zum Öffnen der Vorderwand in engen Grenzen vorbestimmen zu können. Auch die genaue Herstellung der Initialstelle erfordert einen hohen Aufwand. Das bekannte Gassackmodul weist darüber hinaus ein temperaturabhängiges Öffnungsverhalten auf, da der Kunststoff der Vorderwand bei unterschiedlichen Temperaturen eine unterschiedliche Härte und ein unterschiedliches Reißverhalten hat.

Aus der DE 198 16 080 A1 ist ein Gassackmodul bekannt, dessen Gassack im aufgeblasenen Zustand mehrere trichterförmige Einbuchtungen aufweist, die dadurch entstehen, daß jeweils ein Wandbereich des Gassacks fest mit einem zentrischen Abschnitt der Abdeckung verbunden ist. Beim Entfalten des Gassacks wölben sich die zentrischen Abschnitte der Abdeckung in ihren Randbereichen auf.

Die Erfindung schafft ein Gassackmodul, bei dem zumindest der am Modul befestigte zentrische Abschnitt der Vorderwand eine solche Dicke und eine solche Elastizität aufweist, daß er ohne radial aufzureißen beim Entfalten des Gassacks um seine Befestigung, vom Modul aus gesehen, nach außen und radial einwärts schwenkt und sich in Falten legt, um die ringförmige Austrittsöffnung freizugeben, wobei die Vorderwand zumindest im Bereich des zentrischen Abschnitts als Folie, als Gewebe oder als mit einer Gewebe verstärke Folie ausgebildet ist.

Im Gegensatz zu Modulen nach dem Stand der Technik, bei denen radiale Aufreißlinien vorgesehen sind, weist die Vorderwand keine radiale Aufreißlinie auf, sondern ist wesentlich flexibler ausgeführt, so daß sie sich nach außen und radial einwärts bewegt und dabei in Falten legen kann. Die zum Aufreißen notwendigen Kräfte sind deshalb wesentlich geringer als im Stand der Technik, ebenso ist auch ein leichteres Biegen um die Befestigungsstelle beim Schwenken möglich. Der Widerstand, den die Vorderwand beim Aufreißen und Nachaußenschwenken dem Gassack entgegensetzt, wird dadurch reduziert. Die Aufreißkräfte lassen sich in sehr engen Grenzen vorbestimmen. Auch bei einem Sekundäraufprall geht von der weichen, flexiblen Vorderwand, die nach außen steht, nur ein minimales Gefährdungsrisiko aus. Auch die Fertigung einer solchen, ohne radiale AufreiBlinien oder radiale Aufreiß-Initialstellen ausgestattete Vorderwand ist kostengünstig.

Gemäß der bevorzugten Ausführungsform hat der gefaltete Gassack eine nach Entfaltung ringförmige Kammer und eine dem Insassen zugewandte Vorderseite, welche in eine zentrische Einbuchtung übergeht. An der tiefsten Stelle der Einbuchtung ist die Gassackwand an einem Austritt aus dem Modul gehindert. Der nach außen und radial einwärts schwenkende zentrische Abschnitt der Vorderwand liegt bei entfaltetem Gassack in der Einbuchtung.

Vorzugsweise ist ein Mittel zur Befestigung des zentrischen Abschnitts der Vorderwand vorgesehen, das auch zur Befestigung desjenigen Teils der Gassackwand dient, der die tiefste Stelle der Einbuchtung bildet, so daß dieses Befestigungsmittel eine Doppelfunktion inne hat.

Der zentrische Abschnitt hat gemäß einer Ausführungsform vor dem Öffnen des Gehäuses eine vorbestimmte, umlaufende Aufreißlinie, an der er mit dem Rest des Modulgehäuses verbunden ist. Bei dieser Ausführungsform ist der zentrische Abschnitt einstückig mit dem Rest des Modulgehäuses verbunden. Gemäß einer anderen Ausführungsform ist der zentrische Abschnitt als separates Teil ausgeführt, das vor dem Öffnen an seinem radial äußeren Umfangsrand am Rest des Modulgehäuses geklemmt ist. Beim Öffnen der Abdeckung löst sich diese Klemmverbindung schließlich. Diese Ausführungsform hat den Vorteil, daß unterschiedliche Materialien für den zentrischen Abschnitt und das übrige Modulgehäuse verwendet werden können.

Die Klemmung oder die Aufreißlinie kann beispielsweise nahe eines Übergangs von der sogenannten Umfangswand, die sich von der Vorderwand rückseitig erstreckt, zur Vorderwand liegen, damit für die ringförmige Austrittsöffnung ein möglichst großer Außenumfang erzielbar ist.

Gemäß der bevorzugten Ausführungsform ist die Vorderwand eine Folie, mit einer Dicke von < 2,5 mm, vorzugsweise 1 mm.

Die Flexibilität dieser Folie muß so hoch sein, daß sie sich nach dem Öffnen des Moduls den Gestaltänderungen des Gassacks ohne Rißbildung, sondern nur durch Faltenbildung, anpassen kann.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Querschnittsansicht durch ein erfindungsgemäßes Gassackmodul mit voll entfaltetem Gassack und
- Figuren 2a und 2b vergrößerte Ansichten von zwei Ausgestaltungen der Vorderwand im Bereich des Übergangs der Vorderwand zur Umfangswand des Modulgehäuses.

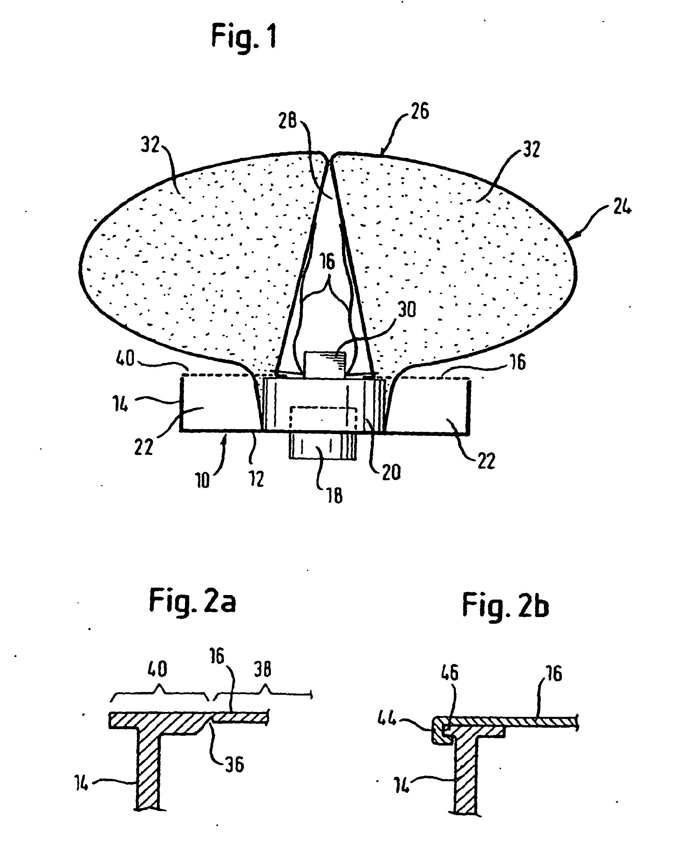

In Figur 1 ist ein Gassackmodul dargestellt, das ein kastenförmiges Modulgehäuse 10, bestehend aus einer Rückwand 12, einer geschlossenen Umfangswand 14 und einer Vorderwand 16, hat, wobei die Vorderwand 16 bei geschlossenem Modul mit unterbrochenen Linien dargestellt ist. Ein Gasgenerator 18 ragt durch die Rückwand 12 teilweise in das Innere des Modulgehäuses 10. Ein topfförmiger Diffusor 20 im Inneren des Modulgehäuses 10 umgibt den Gasgenerator 18 und ist an der Rückwand 12 befestigt. Zwischen dem Diffusor 20 und der Umfangswand 14 entsteht ein ringförmiger Aufnahmeraum 22 für den gefalteten Gassack, der mit 24 bezeichnet ist.

Der Gassack besteht aus einer Gassackwand aus Gewebematerial, deren zum Insassen (Figur 1 oben) gewandte Teil eine sogenannte Vorderseite 26 bildet, auf die der Insasse im Rückhaltefall prallt. Die Vorderseite 26 hat im Bereich ihres Zentrums eine tiefe Einbuchtung 28. Die Einbuchtung 28 wird dadurch gebildet, daß die Gassackwand an der tiefsten Stelle der Einbuchtung 28 an einem Austritt aus dem Modulgehäuse 10 gehindert wird und mittels eines Befestigungsmittels bleibend an dem Diffuser 20 und damit am Modul arretiert ist. Der Teil der Gassackwand an der tiefsten Stelle der Einbuchtung 28 wird zwischen der Oberseite des Diffusors 20 und der Unterseite eines Metallemblems 30 geklemmt, wobei zwischen Emblem 30 und Diffusor 20, radial einwärts einer später noch erläuterten ringförmigen Austrittsöffnung 40, auch noch die gesamte Vorderwand 16 bleibend am Modul durch Klemmen befestigt ist. Das Emblem 30 stellt folglich das Befestigungsmittel dar.

Die Einbuchtung 28 wird nicht mit Gas befüllt, sondern nur eine um sie herum verlaufende ringförmige Kammer 32.

Die Vorderwand 16 besteht aus einer Kunststoffolie mit hoher Flexibilität. Alternativ könnte die Vorderwand auch aus einem Gewebe bestehen oder einem mit einer Gewebeeinlage verstärkten Folie.

In Figur 2a ist dargestellt, daß die Vorderwand 16 einstückig in die Umfangswand 14 übergeht. Eine ringförmige, umfangsmäßig geschlossene Aufreißlinie 36 ist rückseitig vorgesehen, die einen sogenannten zentrischen Abschnitt 38 der Vorderwand von einem radial äußeren Abschnitt 40 der Vorderwand 16 trennt. Bei der Ausführungsform nach Figur 2a reißt durch Beaufschlagung durch den Gassack 24 die Vorderwand 16 an der Aufreißlinie 36 auf, so daß der zentrische Abschnitt 38 vom übrigen Teil des Modulgehäuses getrennt ist. Während bei der Ausführungsform nach Figur 2a nicht die gesamte Vorderwand, sondern nur ein innerer, den zentrischen Abschnitt 28 bildender Teil aufreißt, kann, wie in Figur 1 angedeutet, alternativ auch die gesamte Vorderwand beim Öffnen des Modulgehäuses 10 nach außen und radial einwärts schwenken, ohne radial einzureißen. Dieses Schwenken um die Befestigung (vorliegend die Klemmung zwischen dem Emblem 30 und dem Diffusor 20) erfolgt aufgrund der auf die Vorderwand 16 ausgeübten Kraft des Gassacks 24. Der zentrische Abschnitt 38 oder, gemäß Figur 1, die gesamte Vorderwand 16 hat eine solche Elastizität und eine solch geringe Dicke, daß der zentrische Abschnitt 38 bzw. die gesamte Vorderwand 16 radial einwärts und nach außen gedrückt wird, sich dabei in Falten legt, ohne aber radial aufzureißen. Der zentrische Abschnitt 38 bzw. die gesamte Vorderwand 16 wird dadurch in die Einbuchtung 28 gedrückt und setzt dem Gassack einen geringen Widerstand entgegen, wenn dieser die sogenannte ringförmige Austrittsöffnung 40 zwischen Umfangswand 14 und Seitenwand des Diffusors 20 an der Vorderwand aufdrückt.

Radiale Aufreißlinien an der Vorderwand sind nicht vorgesehen, und radiale Schwächungslinien können ebenfalls entfallen. Wie in Figur 2a zu erkennen ist, kann die Vorderwand im Bereich des zentrischen Abschnitts 38 dünner ausgebildet sein als am Rest der Vorderwand 16, um die Flexibilität des zentrischen Abschnitts 38 zu erhöhen.

Die Faltenbildung des zentrischen Abschnitts 38 bzw. der gesamten Vorderwand 16 erfolgt ähnlich wie bei einer Folie oder einem Gewebe.

Bei der Ausführungsform nach Figur 2b ist die Vorderwand 16 ein separates Teil in Form einer Folie, die an der Umfangswand 14 durch außenseitiges Klemmen befestigt ist und wie bei Figur 1 ohne radial aufzureißen unter Faltenbildung nach außen und radial einwärts schwenkt. Beim Öffnen des Modulgehäuses wird die Klemmverbindung gelöst, d.h. der radial äußere Umfangsrand 44 der Vorderwand 16 kommt außer Eingriff mit einem Ringwulst 46 an der Umfangswand 14. Auch bei dieser Ausführungsform ist die Vorderwand 16 in der Mitte des Ringes, der durch die Austrittsöffnung 40 definiert ist, zwischen dem Emblem 30 und dem Diffusor 20 geklemmt, um den Abschnitt der Vorderwand unter dem Emblem 30 an einer Bewegung nach außen beim Öffnen der Vorderwand 16 zu hindern.

## Patentansprüche

1. Gassackmodul, mit
einem Gassack (24) und
einem Modulgehäuse (10), das eine Vorderwand (16) aufweist, welche eine Austrittsöffnung (40), die die Form eines Ringes hat, für den Gassack (24) verschließt, wobei
ein zentrischer Abschnitt (38) der Vorderwand (16) radial einwärts der Austrittsöffnung (40) am Modul so befestigt ist, daß der zentrische Abschnitt im Bereich seiner Befestigung an einer freien Bewegung nach außen beim Öffnen der Vorderwand (16) gehindert wird,
**dadurch gekennzeichnet, daß** zumindest der am Modul befestigte zentrische Abschnitt (38) der Vorderwand (16) eine solche Dicke und Elastizität aufweist, daß er ohne radial aufzureißen beim Entfalten des Gassacks (24) um seine Befestigung, vom Modul aus gesehen, nach außen und radial einwärts schwenkt und sich in Falten legt, um die ringförmige Austrittsöffnung freizugeben,
wobei die Vorderwand (16) zumindest im Bereich des zentrischen Abschnitts (38) als Folie, als Gewebe oder als mit einer Gewebelage verstärkte Folie ausgebildet ist.

2. Gassackmodul nach Anspruch 1, **dadurch gekennzeichnet, daß** der entfaltete Gassack (24) eine nach Entfaltung ringförmige Kammer (32) und eine dem Insassen zugewandte Vorderseite (26) aufweist, welche in eine zentrische Einbuchtung (28) übergeht, wobei die Gassackwand an der tiefsten Stelle der Einbuchtung (28) an einem Austritt aus dem Modul gehindert ist und wobei der nach außen und radial einwärts schwenkende zentrische Abschnitt (38) der Vorderwand (16) in der Einbuchtung (28) liegt.

3. Gassackmodul nach Anspruch 2, **dadurch gekennzeichnet, daß** ein Mittel zur Befestigung des zentrischen Abschnitts (38) der Vorderwand (16) auch zur Befestigung desjenigen Teils der Gassackwand dient, der die tiefste Stelle der Einbuchtung bildet.

4. Gassackmodul nach einem der vorhergehenden Ansprüche, **dadurch gekennzeichnet, daß** nicht nur der zentrische Abschnitt (38) der Vorderwand (16), sondern die gesamte Vorderwand (16) ohne radial einzureißen beim Entfalten des Gassacks (24) sich in Falten legend nach außen und radial einwärts schwenkt

5. Gassackmodul nach einem der vorhergehenden Ansprüche, **dadurch gekennzeichnet, daß** der zentrische Abschnitt (38) vor dem Öffnen des Modulgehäuses an einer vorbestimmten, umlaufenden Aufreißlinie (36) mit dem Rest des Modul gehäuses verbunden ist.

6. Gassackmodul nach Anspruch 5, **dadurch gekennzeichnet, daß**- das Modulgehäuse eine sich von der Vorderwand (16) rückseitig erstreckende Umfangswand (14) hat und die Aufreißlinie (36) nahe des Übergangs von Umfangswand (14) zu Vorderwand (16) liegt.

7. Gassackmodul nach einem der Ansprüche 1 bis 4, **dadurch** gekennzeicbnet, daß der zentrische Abschnitt (38) an seinem radial äußeren Umfangsrand (44) am Rest des Modulgehäuses geklemmt ist und die Klemmverbindung beim Öffnen des Modulgehäuses gelöst wird.

## Claims

1. A gas bag module, comprising
a gas bag (24), and
a module housing (10) which has a front wall (16) that closes a ring-shaped outlet opening (40) for the gas bag (24),
a centric portion (38) of the front wall (16) being attached to the module radially inwardly of the outlet opening (40) such that in the region of its attachment the centric portion is prevented from freely moving outwards when the front wall (16) is opened,
**characterized in that** at least the centric portion (38) of the front wall (16), which is attached to the module, has such a thickness and elasticity that upon deployment of the gas bag (24) it swivels, without tearing open radially, about its attachment outwards and radially inwards, as seen from the module, and forms folds in order to clear the ring-shaped outlet opening,
the front wall (16) being provided in the form of a film, a fabric or a film reinforced with a fabric layer at least in the region of the centric portion (38).

2. The gas bag module as claimed in claim 1, **characterized in that** the deployed gas bag (24) has a chamber (32) which is ring-shaped upon deployment and a front side (26) facing the occupant, the front side continuing into a centric indentation (28), the gas bag wall being prevented from exiting from the module at the deepest point of the indentation (28), and the centric portion (38) of the front wall (16), which swivels outwards and radially inwards, being located in the indentation (28).

3. The gas bag module as claimed in claim 2, **characterized in that** a means for fastening the centric portion (38) of the front wall (16) also serves to fasten that part of the gas bag wall which forms the deepest point of the indentation.

4. The gas bag module as claimed in any of the preceding claims, **characterized in that** not only the centric portion (38) of the front wall (16), but the entire front wall (16), upon deployment of the gas bag (24), swivels outwards and radially inwards while forming folds, without tearing radially.

5. The gas bag module as claimed in any of the preceding claims, **characterized in that** before the module housing is opened, the centric portion (38) is connected with the rest of the module housing along a predetermined, surrounding tear line (36).

6. The gas bag module as claimed in claim 5, **characterized in that** the module housing has a peripheral wall (14) extending from the front wall (16) to the rear, and the tear line (36) is located close to the transition from the peripheral wall (14) to the front wall (16).

7. The gas bag module as claimed in any of claims 1 to 4, **characterized in that** at its radially outer peripheral edge (44) the centric portion (38) is clamped to the rest of the module housing, and the clamping connection is released when the module housing is opened.

## Revendications

1. Module de coussin à gaz, comportant
un coussin à gaz (24) et
un boîtier de module (10) qui présente une paroi antérieure (16) qui ferme une ouverture de sortie (40) de forme annulaire pour le coussin à gaz (24),
un tronçon central (38) de la paroi antérieure (16) étant fixé sur le module radialement vers l'intérieur de l'ouverture de sortie (40) de telle sorte que dans la région de sa fixation, le tronçon central est empêché de se mouvoir librement vers l'extérieur lorsque de la paroi antérieure (16) s'ouvre,
**caractérisé en ce qu'**au moins le tronçon central (38) de la paroi antérieure (16), qui est fixé sur le module, présente une telle épaisseur et une telle élasticité que lors du déploiement du coussin à gaz (24), il pivote autour de sa fixation vers l'extérieur et radialement vers l'intérieur, vu depuis le module, et se plisse pour dégager l'ouverture de sortie de forme annulaire, sans se déchirer radialement,
la paroi antérieure (16) étant réalisée, au moins dans la région du tronçon (38) central, sous forme de feuille, de tissu ou de feuille renforcée d'une couche de tissu.

2. Module de coussin à gaz selon la revendication 1, **caractérisé en ce que** le coussin à gaz (24) déployé présente une chambre (32) de forme annulaire après le déploiement et une face antérieure (26) tournée vers le passager, laquelle se transforme en un creux (28) central, la paroi de coussin à gaz étant empêchée de sortir du module au point le plus profond du creux (28), et le tronçon central (38) de la paroi antérieure (16), lequel pivote vers l'extérieur et radialement vers l'intérieur, étant situé dans le creux (28).

3. Module de coussin à gaz selon la revendication 2, **caractérisé en ce qu'**un moyen de fixation du tronçon central (38) de la paroi antérieure (16) sert aussi à la fixation de la partie de la paroi de coussin à gaz qui forme le point le plus profond du creux.

4. Module de coussin à gaz selon l'une des revendications précédentes, **caractérisé en ce que** lors du déploiement du coussin à gaz (24), non seulement le tronçon central (38) de la paroi antérieure (16), mais la paroi antérieure (16) toute entière pivote vers l'extérieur et radialement vers l'intérieur en se plissant, sans se déchirer radialement.

5. Module de coussin à gaz selon l'une des revendications précédentes, **caractérisé en ce qu'**avant l'ouverture du boîtier de module, le tronçon central (38) est relié au reste du boîtier de module sur une ligne de déchirement (36) périphérique prédéterminée.

6. Module de coussin à gaz selon la revendication 5, **caractérisé en ce que** le boîtier de module a une paroi périphérique (14) s'étendant sur la face arrière depuis la paroi antérieure (16), et la ligne de déchirement (36) est située à proximité de la transition entre la paroi périphérique (14) et la paroi antérieure (16).

7. Module de coussin à gaz selon l'une des revendications 1 à 4, **caractérisé en ce que** sur son bord périphérique (44) radialement extérieur, le tronçon central (38) est serré contre le reste du boîtier de module, et la liaison par serrage est desserrée lors de l'ouverture du boîtier de module.
